# EUROPEAN PATENT APPLICATION

(11) **EP 2 308 935 A1**
(43) Date of publication of application: **13.04.2011**
(21) Application number: 09799957.7
(22) Date of filing: 26.05.2009
(51) Int. Cl.: C09J 7/02, B32B 7/12, B32B 37/12, B32B 38/14

(54) **DOUBLE-SIDED TAPE AND ITS PREPARING METHOD**

(30) Priority: 22.07.2008 CN 200810040875
(71) Applicant: Tu, Jianbing, Zhejiang 315600 (CN)
(72) Inventor: Tu, Jianbing, Zhejiang 315600 (CN)
(74) Representative: Grünecker, Kinkeldey, Stockmair & Schwanhäusser Anwaltssozietät
(86) International application number: PCT/CN2009/072005
(87) International publication number: WO 2010/009641

(57) **Abstract**

A double-sided tape, comprising a release paper layer (1) composed of a tape base layer (11) and an upper anti-adhesion layer (12) and a lower anti-adhesion layer (13) coated on the upper and lower surfaces of the tape base layer, wherein a first sticking layer (2) on the upper surface of the release paper layer, a display layer (3) on the upper surface of the first sticking layer, a transparent adhesive layer (4) on the upper surface of the display layer and a second sticking layer (5) on the upper surface of the transparent adhesive layer are arranged in a superposition mode to form a lamellar double-sided tape structure.

## Description

### Technical Field

The invention relates to a stationery article, more particularly to a double-sided tape having the functionalities of advertising and indication.

### Background Art

Characterized by both stickable sides, a double-sided tape has been widely used in daily work, study and life. A common double-sided tape has only a single function by which pieces of paper or objects adhere to each other. Taking this into account, China Utility No. 01202243.8 discloses a peelable and restickable double-sided tape which is a modification of a common double-sided tape in its layer structure, such that the resultant double-sided tape exhibits new functionalities of advertising, indication, etc., in addition to the adhesive property that remains.

With respect to the structure of the peelable and restickable double-sided tape disclosed in the patent No. 01202243.8, the peelable and restickable double-sided tape comprises a core coated with a peelable adhesive layer and a piece of release paper affixed to the peelable adhesive layer, wherein one side of the core sticks to an affixing layer on which a display layer comprising colors, patterns or characters, etc. is arranged, while the display layer is coated with a peelable adhesive layer. The aforementioned peelable adhesive layer is affixed to a piece of release paper. Once the release paper is torn away, the images of colors, patterns or characters, etc. in the display layer may be seen clearly through the peelable adhesive layer, affording such functionalities as aesthetic decoration, attractive appearance, advertising and indication, etc.

As can be seen from the foregoing patent structure, in order to achieve the aforementioned new functionalities, the claimed tape is more complex than a common double-sided tape in terms of lamellar structure and manufacturing process in which more starting materials are consumed and the cost is higher. Furthermore, due to the fact that the claimed tape has more layers, its total thickness is increased. Therefore, it is only suitable to be made into a sheet or rolled into a big roll rather than a small tape core shape to be installed in a small coater box for use.

### Summary of the Invention

The technical problem to be addressed by the invention is to overcome the shortcomings of the prior art and provide a double-sided tape and its preparing method, wherein a new structure design and a new process are used to prepare a double-sided tape which has less layers and smaller thickness, saves starting materials, can be rolled into a small tape core shape to be installed in a double-sided tape coater box for use, and has functionalities of advertising and display.

The technical solution to the aforementioned technical problem according to the invention is a double-sided tape comprising a release paper layer composed of a tape base layer and an upper and a lower anti-adhesion layers coated on the upper and lower surfaces of the tape base layer, wherein the upper surface of the release paper layer is adhered to a first sticking layer, the upper surface of the first sticking layer is adhered to a display layer, the upper surface of the display layer is adhered to a transparent adhesive layer, the upper surface of the transparent adhesive layer is adhered to a second sticking layer, and all of the layers are arranged in a superposition mode to form a lamellar double-sided tape structure.

The tape base layer is made from plastic thin film or fiber paper tape and has a thickness of 0.012-0.2mm.

The display layer is made from plastic printing ink which is printed on the upper surface of the transparent adhesive layer with a plastic thin film color printer according to a conventional printing process to form color patterns and characters.

The anti-adhesion layers, sticking layers and transparent adhesive layer are made from starting materials in the following weight proportions in kg/part.
A. Anti-adhesion layer coating (A)
   Solid silicon oil 0.9-1.1 #120 gasoline 5-7
B. Anti-adhesion layer coating (B)
   Solid silicon oil 0.9-1.1 #120 gasoline 11-13
C. Sticking layer coating
   Solid hot melt pressure sensitive adhesive 0.6-1.4 Ethyl acetate 2.6-3.4
D. Transparent adhesive layer coating
   Water 17-23 Acrylic acid emulsion 18-22 Ethylene glycol 1.8-2.2 Ammonia 0.18-0.22 Thickener 27-33

The above acrylic acid emulsion is a dilute thick liquid formulated from AC-261P acrylic acid emulsion with water added at a ratio of 1:1. The thickener is made from starting materials in the following weight proportions in kg/part at ambient temperature: water 17-23, ammonia 0.04-0.08, hydroxyethyl cellulose ether HS100000YPZ 1.2-1.6, which are mixed and agitated homogenously to produce the thickener.

The upper anti-adhesion layer uses the anti-adhesion layer coating (B), while the lower one uses the anti-adhesion layer coating (A). The first and second sticking layers use the same sticking layer coating.

A process for producing the double-sided tape is provided, comprising
I. Formulation of coatings
   1. Formulation of anti-adhesion layer coating A: according to the specified weight proportions (unit: kg/part), 0.9-1.1 solid silicon oil is dissolved in 5-7 #120 gasoline at ambient temperature, and agitated homogenously for later use;
   2. Formulation of anti-adhesion layer coating B: according to the specified weight proportions (unit: kg/part), 0.9-1.1 solid silicon oil is dissolved in 11-13 #120 gasoline at ambient temperature, and agitated homogenously for later use;
   3. Formulation of sticking layer coating: according to the specified weight proportions (unit: kg/part), 0.6-1.4 solid hot melt pressure sensitive adhesive is dissolved in 2.6-3.4 ethyl acetate at ambient temperature, and agitated homogenously for later use;
   4. Formulation of transparent adhesive layer coating: according to the specified weight proportions (unit: kg/part), 17-23 water, 18-22 acrylic acid emulsion, 1.8-2.2 ethylene glycol, 0.18-0.22 ammonia and 27-33 thickener are mixed at ambient temperature, and agitated homogenously for later use.
II. Coating and Processing
   1. The prepared anti-adhesion layer coatings A and B are loaded in the feeding troughs of a coating machine separately. Then, a plastic thin film tape or a fiber paper tape having a thickness of 0.012-0.2mm is chosen as the tape base layer, which is disposed on a feeding roll of the coating machine. The coating machine is used to apply the anti-adhesion layer coating B on the upper surface of the tape base layer with the coating amount being controlled at 1-1.4g/m². After the coating is dried in the drying tunnel of a drying oven at a temperature set between 100°C and 140°C, the lower surface of the tape base layer is coated with the anti-adhesion layer coating A with the coating amount being controlled at 1.8-2.1g/m². After the coating is dried in the drying tunnel of a drying oven at a temperature set between 100°C and 140°C, a release paper layer with an upper and a lower anti-adhesion layers intimately adhered to the upper and lower surfaces of the tape base layer respectively is obtained.
   2. The prepared sticking layer coating is loaded in a feeding trough of a coating machine. Then, the prepared release paper layer is loaded onto a feeding roll of the coating machine. The coating machine is used to apply the first sticking layer coating on the upper surface of the release paper layer with a coating thickness of 0.005-0.02mm. After dried in the drying tunnel of a drying oven at a temperature set between 80°C and 120°C, a semi-product (i) is obtained for later use.
   3. The prepared anti-adhesion layer coatings A and B are loaded in the feeding troughs of a coating machine separately. Then, a PET plastic thin film tape or a fiber paper tape having a thickness of 0.012-0.1mm is chosen as the tape base, which is disposed on a feeding roll of the coating machine. The coating machine is used to apply the anti-adhesion layer coating A on the upper surface of the tape base with the coating amount being controlled at 1.8-2.1g/m². After the coating is dried in the drying tunnel of a drying oven at a temperature set between 100°C and 140°C, the lower surface of the tape base is coated with the anti-adhesion layer coating B with the coating amount being controlled at 1-1.4g/m². After the coating is dried in the drying tunnel of a drying oven at a temperature set between 100°C and 140°C, a transitional release paper with an upper and a lower anti-adhesion layers intimately adhered to the upper and lower surfaces of the tape base respectively is obtained.
   4. The prepared transparent adhesive layer coating is loaded in a feeding trough of a coating machine. Then, the prepared transitional release paper is loaded onto a feeding roll of the coating machine. The coating machine is used to apply the transparent adhesive layer coating on the upper surface of the transitional release paper with a coating thickness of 0.005-0.02mm. After the coating is dried in the drying tunnel of a drying oven at a temperature set between 80°C and 120°C , a commercial plastic printing ink is used to print designed color patterns and characters on the upper surface of the transparent adhesive layer with a plastic thin film color printer according to a conventional printing process to form a display layer intimately adhered to the transparent adhesive layer. Thus, a semi-product (ii) is obtained for later use.
   5. The semi-products (ii) and (i) prepared in Procedures 2 and 4 are loaded onto feeding rolls 1 and 2 of a compounding machine respectively. The first sticking layer surface of the semi-product (i) is superimposed on the display layer surface of the semi-product (ii). After pressed by the compounding press rolls of the compounding machine, the display layer surface of the semi-product (ii) is intimately adhered to the first sticking layer surface of the semi-product (i). When the transitional release paper is torn off from the transparent adhesive layer, the display layer and the transparent adhesive layer are transferred to be connected with the semi-product (i). After passing the separating roll of the compounding machine, a semi-product (iii) is obtained and collected on a collecting roll for later use.
   6. The prepared sticking layer coating is loaded in a feeding trough of a coating machine. Then, the prepared semi-product (iii) is loaded onto a feeding roll of the coating machine. The coating machine is used to apply the second sticking layer coating on the transparent adhesive layer surface of the semi-product (iii) with a coating thickness of 0.005-0.02mm. After the coating is dried in the drying tunnel of a drying oven at a temperature set between 80°C and 120°C, a cylindrical finished product is obtained and collected on a collecting roller of the coating machine.

   Compared with the prior art, the invention has the following advantages. Due to the new lamellar tape structure design and the new manufacturing process, the number of layers in the tape material is reduced, and the core layer as well as the sticking layer coated on the core layer in the prior art tape are eliminated, while the performances of the prior art double-sided tape in use are kept. In addition, an extremely thin transparent adhesive layer produced by coating process replaces the paper or plastic material used by the affixing layer in the prior art tape, resulting in further reduced tape thickness, more starting materials that are saved, simplified manufacturing process, and lower production cost. Furthermore, the double-sided tape of the invention may be rolled into small tape core shape that is suitable to be installed in a small coater box for use, bringing significant convenience to users. On the other hand, the spent tape boxes and tape core release paper are ready to be recycled, which facilitates environmental protection.

### Brief Description of the Drawings

Fig. 1 is a schematic illustration of a lamellar structure according to an embodiment of the invention.
Fig. 2 is a production process flow chart for coating and processing according to the invention.
Fig. 3 is an illustration schematically showing the production flow of the compounding procedure in the production process flow for coating and processing according to the invention.
Fig. 4 is a schematic illustration of a lamellar structure according to another embodiment of the invention.
Fig. 5 is an illustration schematically showing the tape core shape rolled and installed in a coater box according to an embodiment of the invention.
Fig. 6 is an illustration schematically showing the state of use of an embodiment according to the invention.

### Detailed Description of the Invention

The invention will be further detailed with reference to the embodiments shown in the accompanying drawings.

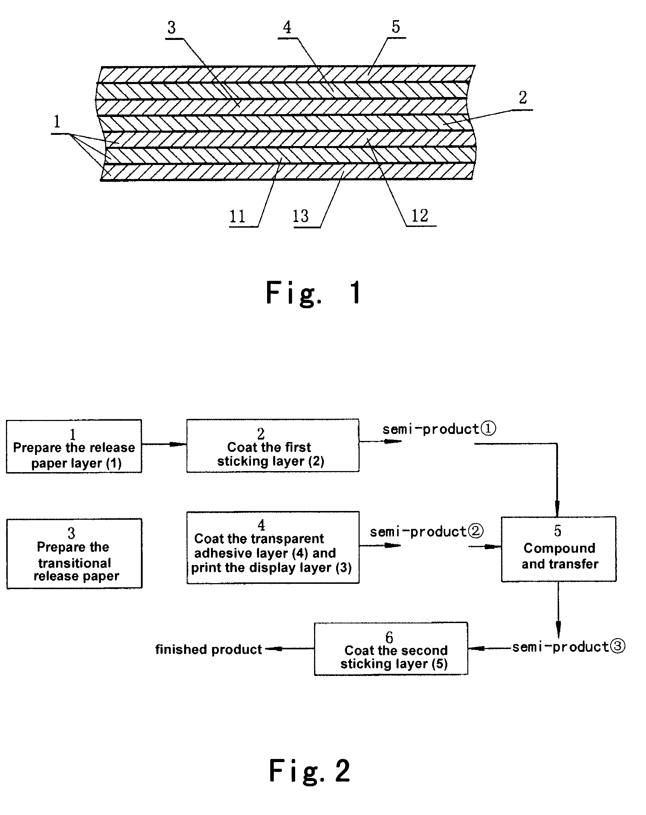

As shown in Figs. 1-3, the double-sided tape of the invention comprises a release paper layer 1 composed of a tape base layer 11 of plastic thin film or fiber paper tape and an upper anti-adhesion layer 12 and a lower anti-adhesion layer 13 coated on the upper and lower surfaces of the tape base layer, wherein the upper surface of the release paper layer 1 is adhered to a first sticking layer 2, the upper surface of the first sticking layer 2 is adhered to a display layer 3, the upper surface of the display layer 3 is adhered to a transparent adhesive layer 4, the upper surface of the transparent adhesive layer 4 is adhered to a second sticking layer 5, and all of the layers are arranged in a superposition mode to form a lamellar double-sided tape structure.

The tape base layer material is plastic thin film of PET, PP, PC, PE, etc. or fiber paper tape, and has a thickness chosen from 0.012-0.2mm according to the requirements of the product.

The display layer material is commercial plastic printing ink which is printed on the upper surface of the transparent adhesive layer 4 with a plastic thin film color printer according to a conventional printing process to form color patterns and characters.

The anti-adhesion layers, sticking layers and transparent adhesive layer are made from starting materials in the following weight proportions in kg/part.

### A. Anti-adhesion layer coating (A)

Solid silicon oil 0.9-1.1 #120 gasoline 5-7

### B. Anti-adhesion layer coating (B)

Solid silicon oil 0.9-1.1 #120 gasoline 11-13

### C. Sticking layer coating

Solid hot melt pressure sensitive adhesive 0.6-1.4 Ethyl acetate 2.6-3.4

### D. Transparent adhesive layer coating

Water 17-23 Acrylic acid emulsion 18-22 Ethylene glycol 1.8-2.2 Ammonia 0.18-0.22 Thickener 27-33

The above acrylic acid emulsion is a dilute thick liquid formulated from AC-261P acrylic acid emulsion with water added at a ratio of 1:1. The thickener is made from starting materials in the following weight proportions in kg/part at ambient temperature: water 17-23, ammonia 0.04-0.08, hydroxyethyl cellulose ether HS100000YPZ 1.2-1.6, which are mixed and agitated homogenously to produce the thickener.

The upper anti-adhesion layer uses the anti-adhesion layer coating (B), while the lower one uses the anti-adhesion layer coating (A). The first and second sticking layers use the same sticking layer coating.

The aforementioned starting materials are chosen from commercial finished products or those manufactured by chemical materials factories.

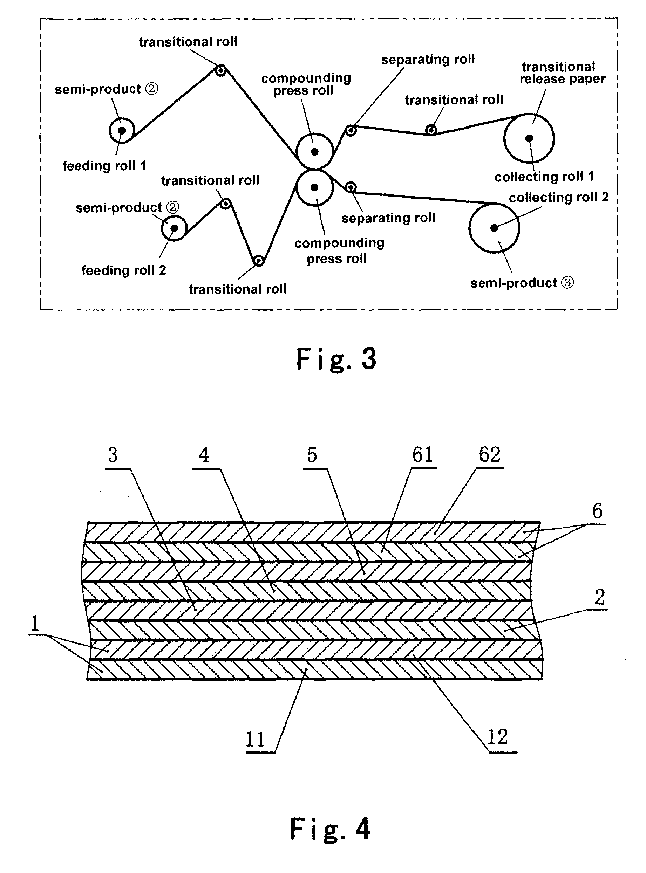

A process for producing the double-sided tape is provided, comprising
I. Formulation of coatings
   1. Formulation of anti-adhesion layer coating A: according to the specified weight proportions (unit: kg/part), 0.9-1.1 solid silicon oil is dissolved in 5-7 #120 gasoline at ambient temperature, and agitated homogenously for later use;
   2. Formulation of anti-adhesion layer coating B: according to the specified weight proportions (unit: kg/part), 0.9-1.1 solid silicon oil is dissolved in 11-13 #120 gasoline at ambient temperature, and agitated homogenously for later use;
   3. Formulation of sticking layer coating: according to the specified weight proportions (unit: kg/part), 0.6-1.4 solid hot melt pressure sensitive adhesive is dissolved in 2.6-3.4 ethyl acetate at ambient temperature, and agitated homogenously for later use;
   4. Formulation of transparent adhesive layer coating: according to the specified weight proportions (unit: kg/part), 17-23 water, 18-22 acrylic acid emulsion, 1.8-2.2 ethylene glycol, 0.18-0.22 ammonia and 27-33 thickener are mixed at ambient temperature, and agitated homogenously for later use.
II. Coating and Processing
   1. The prepared anti-adhesion layer coatings A and B are loaded in the feeding troughs of a coating machine separately. Then, a plastic thin film tape or a fiber paper tape having a thickness of 0.012-0.2mm is chosen as the tape base layer 11, which is disposed on a feeding roll of the coating machine. The coating machine is used to apply the anti-adhesion layer coating B on the upper surface of the tape base layer 11 with the coating amount being controlled at 1-1.4g/m². After the coating is dried in the drying tunnel of a drying oven at a temperature set between 100°C and 140°C, the lower surface of the tape base layer 11 is coated with the anti-adhesion layer coating A with the coating amount being controlled at 1.8-2.1 g/m². After the coating is dried in the drying tunnel of a drying oven at a temperature set between 100°C and 140 °C , a release paper layer 1 with an upper anti-adhesion layer 12 and a lower anti-adhesion layer 13 intimately adhered to the upper and lower surfaces of the tape base layer 11 respectively is obtained.
   2. The prepared sticking layer coating is loaded in a feeding trough of a coating machine. Then, the prepared release paper layer 1 is loaded onto a feeding roll of the coating machine. The coating machine is used to apply the first sticking layer 2 coating on the upper surface of the release paper layer 1 with a coating thickness of 0.005-0.02mm. After dried in the drying tunnel of a drying oven at a temperature set between 80°C and 120°C, a semi-product (i) is obtained for later use.
   3. The prepared anti-adhesion layer coatings A and B are loaded in the feeding troughs of a coating machine separately. Then, a PET plastic thin film tape or a fiber paper tape having a thickness of 0.012-0.1mm is chosen as the tape base, which is disposed on a feeding roll of the coating machine. The coating machine is used to apply the anti-adhesion layer coating A on the upper surface of the tape base with the coating amount being controlled at 1.8-2.1g/m². After the coating is dried in the drying tunnel of a drying oven at a temperature set between 100°C and 140°C, the lower surface of the tape base is coated with the anti-adhesion layer coating B with the coating amount being controlled at 1-1.4g/m². After the coating is dried in the drying tunnel of a drying oven at a temperature set between 100°C and 140°C, a transitional release paper with an upper and a lower anti-adhesion layers intimately adhered to the upper and lower surfaces of the tape base respectively is obtained.
   4. The prepared transparent adhesive layer coating is loaded in a feeding trough of a coating machine. Then, the prepared transitional release paper is loaded onto a feeding roll of the coating machine. The coating machine is used to apply the transparent adhesive layer 4 coating on the upper surface of the transitional release paper with a coating thickness of 0.005-0.02mm. After the coating is dried in the drying tunnel of a drying oven at a temperature set between 80 °C and 120°C , a commercial plastic printing ink is used to print designed color patterns and characters on the upper surface of the transparent adhesive layer 4 with a plastic thin film color printer according to a conventional printing process to form a display layer 3 intimately adhered to the transparent adhesive layer 4. Thus, a semi-product (ii) is obtained for later use.
   5. The semi-products (ii) and (i) prepared in Procedures 2 and 4 are loaded onto feeding rolls 1 and 2 of a compounding machine respectively. As shown in Fig. 3, the first sticking layer 2 surface of the semi-product (i) is superimposed on the display layer 3 surface of the semi-product (ii). After pressed by the compounding press rolls of the compounding machine, the display layer 3 surface of the semi-product (ii) is intimately adhered to the first sticking layer 2 surface of the semi-product (i). Since the coating amount of the anti-adhesion agent previously coated on the upper surface of the tape base in the transitional release paper is higher than that on the upper surface of the tape base 11, the bonding force between the first sticking layer 2 of the semi-product (i) and the anti-adhesion layer surface of the release paper 1 is larger than that between the transparent adhesive layer 4 of the semi-product (ii) and the anti-adhesion layer surface of the transitional release paper. Thus, the transitional release paper may be torn off from the transparent adhesive layer 4. As a result, the display layer 3 and the transparent adhesive layer 4 are transferred to be connected with the semi-product (i). After passing the separating roll of the compounding machine, a semi-product (iii) is obtained and collected on a collecting roll for later use.
   6. The prepared sticking layer coating is loaded in a feeding trough of a coating machine. Then, the prepared semi-product (iii) is loaded onto a feeding roll of the coating machine. The coating machine is used to apply the second sticking layer 5 coating on the transparent adhesive layer 4 surface of the semi-product (iii) with a coating thickness of 0.005-0.02mm. After the coating is dried in the drying tunnel of a drying oven at a temperature set between 80°C and 120°C, a cylindrical finished product is obtained and collected on a collecting roller of the coating machine.

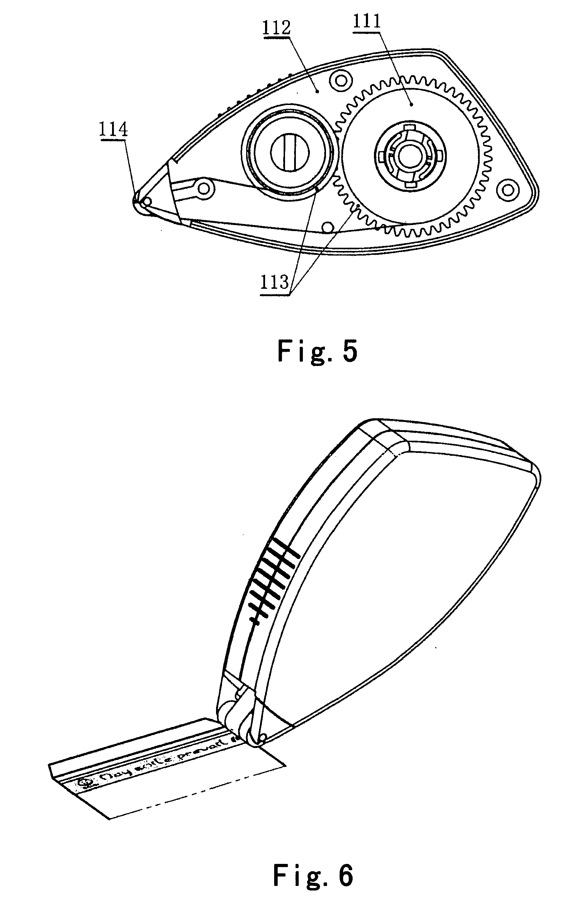

In the practical use of the aforementioned double-sided tape, as shown in Fig. 5, the cylindrical double-sided tape is cut by a cutter into tape cores 111 having a desired width compatible with a specification. Then, the tape core 111 is installed on a driving means 113 and a tape output head 114 in a coater box 112, wherein the driving means 113 is composed of a tape output wheel, a tape take-up wheel, etc. The overall structure of the coater box is substantially the same as that of a commonly used correction tape, so that the coater box may be seen as the prior art. As shown in Fig. 6, during its use, the double-sided tape is first allowed to cover the desired part of a piece of paper or an object, and then it is pressed slightly, so that the sticking layer sticks to the paper or object. Subsequently, the double-sided tape is severed. Hence, the transparent adhesive layer and the display layer bearing patterns and characters are detached from the release paper along with the sticking layer and transferred to the desired part of the paper or object. Therefore, the adhesion between paper and paper, as well as paper and object, is realized. Meanwhile, during the use, the information of color, characters or patterns carried by the display layer may be seen directly through the transparent adhesive layer, and the effect of advertising and indication is achieved as well. Thus, the use of the double-sided tape is quite convenient.

The above description concerns the lamellar structure of the double-sided tape according to the invention when it is formed into cylindrical shape for use or formed into tape core shape and installed in a coater box for use. If it is formed into a sheet for use, as shown in Fig.4, only one more piece of upper release paper 6 is needed to be compounded onto the upper surface of the second sticking layer 5 of the double-sided tape in the aforementioned embodiment. The upper release paper 6 is composed of an upper tape base layer 62 and an anti-adhesion layer 61 coated on its lower surface, wherein the upper tape base layer 62 is a plastic thin film tape or a fiber paper tape. Alternatively, the lower surface of the release paper layer 1 may not be coated with an anti-adhesion layer 13.

## Claims

1. A double-sided tape, comprising a release paper layer (1) composed of a tape base layer (11) and an upper anti-adhesion layer (12) and a lower anti-adhesion layer (13) coated on the upper and lower surfaces of the tape base layer, wherein the upper surface of the release paper layer (1) is adhered to a first sticking layer (2), the upper surface of the first sticking layer (2) is adhered to a display layer (3), the upper surface of the display layer (3) is adhered to a transparent adhesive layer (4), the upper surface of the transparent adhesive layer (4) is adhered to a second sticking layer (5), and all of the layers are arranged in a superposition mode to form a lamellar double-sided tape structure;
The tape base layer material is plastic thin film or fiber paper tape, and has a thickness of 0.012-0.2mm;
The display layer material is commercial plastic printing ink which is printed on the upper surface of the transparent adhesive layer 4 with a plastic thin film color printer according to a conventional printing process to form color patterns and characters;
The anti-adhesion layers, sticking layers and transparent adhesive layer are made from starting materials in the following weight proportions in kg/part:
A. Anti-adhesion layer coating (A)
Solid silicon oil 0.9-1.1 #120 gasoline 5-7
B. Anti-adhesion layer coating (B)
Solid silicon oil 0.9-1.1 #120 gasoline 11-13
C. Sticking layer coating
Solid hot melt pressure sensitive adhesive 0.6-1.4 Ethyl acetate 2.6-3.4
D. Transparent adhesive layer coating
Water 17-23 Acrylic acid emulsion 18-22 Ethylene glycol 1.8-2.2 Ammonia 0.18-0.22 Thickener 27-33
The above acrylic acid emulsion is a dilute thick liquid formulated from AC-261P acrylic acid emulsion with water added at a ratio of 1:1; the thickener is made from starting materials in the following weight proportions in kg/part at ambient temperature: water 17-23, ammonia 0.04-0.08, hydroxyethyl cellulose ether HS100000YPZ 1.2-1.6, which are mixed and agitated homogenously to produce the thickener;
The upper anti-adhesion layer uses the anti-adhesion layer coating (B), while the lower one uses the anti-adhesion layer coating (A); the first and second sticking layers use the same sticking layer coating.

2. A process for producing the double-sided tape of Claim 1, comprising
I. Formulation of coatings
1. Formulation of anti-adhesion layer coating A: according to the specified weight proportions (unit: kg/part), 0.9-1.1 solid silicon oil is dissolved in 5-7 #120 gasoline at ambient temperature, and agitated homogenously for later use;
2. Formulation of anti-adhesion layer coating B: according to the specified weight proportions (unit: kg/part), 0.9-1.1 solid silicon oil is dissolved in 11-13 #120 gasoline at ambient temperature, and agitated homogenously for later use;
3. Formulation of sticking layer coating: according to the specified weight proportions (unit: kg/part), 0.6-1.4 solid hot melt pressure sensitive adhesive is dissolved in 2.6-3.4 ethyl acetate at ambient temperature, and agitated homogenously for later use;
4. Formulation of transparent adhesive layer coating: according to the specified weight proportions (unit: kg/part), 17-23 water, 18-22 acrylic acid emulsion, 1.8-2.2 ethylene glycol, 0.18-0.22 ammonia and 27-33 thickener are mixed at ambient temperature, and agitated homogenously for later use;
II. Coating and Processing
1. The prepared anti-adhesion layer coatings (A) and (B) are loaded in the feeding troughs of a coating machine separately; then, a plastic thin film tape or a fiber paper tape having a thickness of 0.012-0.2mm is chosen as the tape base layer (11), which is disposed on a feeding roll of the coating machine; the coating machine is used to apply the anti-adhesion layer coating (B) on the upper surface of the tape base layer (11) with the coating amount being controlled at 1-1.4g/m²; after the coating is dried in the drying tunnel of a drying oven at a temperature set between 100 °C and 140°C, the lower surface of the tape base layer (11) is coated with the anti-adhesion layer coating (A) with the coating amount being controlled at 1.8-2.1g/m²; after the coating is dried in the drying tunnel of a drying oven at a temperature set between 100 °C and 140°C, a release paper layer(1) with an upper and a lower anti-adhesion layers(12, 13) intimately adhered to the upper and lower surfaces of the tape base layer(11) respectively is obtained;
2. The prepared sticking layer coating is loaded in a feeding trough of a coating machine; then, the prepared release paper layer (1) is loaded onto a feeding roll of the coating machine; the coating machine is used to apply the first sticking layer (2) coating on the upper surface of the release paper layer (1) with a coating thickness of 0.005-0.02mm; after dried in the drying tunnel of a drying oven at a temperature set between 80°C and 120°C, a semi-product (i) is obtained for later use;
3. The prepared anti-adhesion layer coatings (A) and (B) are loaded in the feeding troughs of a coating machine separately; then, a PET plastic thin film tape or a fiber paper tape having a thickness of 0.012-0.1mm is chosen as the tape base, which is disposed on a feeding roll of the coating machine; the coating machine is used to apply the anti-adhesion layer coating (A) on the upper surface of the tape base with the coating amount being controlled at 1.8-2.1g/m²; after the coating is dried in the drying tunnel of a drying oven at a temperature set between 100 °C and 140 °C , the lower surface of the tape base is coated with the anti-adhesion layer coating (B) with the coating amount being controlled at 1-1.4g/m²; after the coating is dried in the drying tunnel of a drying oven at a temperature set between 100°C and 140°C, a transitional release paper with an upper and a lower anti-adhesion layers intimately adhered to the upper and lower surfaces of the tape base respectively is obtained;
4. The prepared transparent adhesive layer coating is loaded in a feeding trough of a coating machine; then, the prepared transitional release paper is loaded onto a feeding roll of the coating machine; the coating machine is used to apply the transparent adhesive layer (4) coating on the upper surface of the transitional release paper with a coating thickness of 0.005-0.02mm; after the coating is dried in the drying tunnel of a drying oven at a temperature set between 80°C and 120°C, a commercial plastic printing ink is used to print designed color patterns and characters on the upper surface of the transparent adhesive layer (4) with a plastic thin film color printer according to a conventional printing process to form a display layer (3) intimately adhered to the transparent adhesive layer (4); thus, a semi-product (ii) is obtained for later use;
5. The semi-products (ii) and (i) prepared in Procedures 2 and 4 are loaded onto feeding rolls (1) and (2) of a compounding machine respectively; the first sticking layer (2) surface of the semi-product (i) is superimposed on the display layer (3) surface of the semi-product (ii); after pressed by the compounding press rolls of the compounding machine, the display layer (3) surface of the semi-product (ii) is intimately adhered to the first sticking layer (2) surface of the semi-product (i); when the transitional release paper is torn off from the transparent adhesive layer (4), the display layer (3) and the transparent adhesive layer (4) are transferred to be connected with the semi-product (i); after passing the separating roll of the compounding machine, a semi-product (iii) is obtained and collected on a collecting roll for later use;
6. The prepared sticking layer coating is loaded in a feeding trough of a coating machine; then, the prepared semi-product (iii) is loaded onto a feeding roll of the coating machine; the coating machine is used to apply the second sticking layer (5) coating on the transparent adhesive layer (4) surface of the semi-product (iii) with a coating thickness of 0.005-0.02mm; after the coating is dried in the drying tunnel of a drying oven at a temperature set between 80°C and 120°C, a cylindrical finished product is obtained and collected on a collecting roller of the coating machine.
